# EUROPÄISCHE PATENTSCHRIFT

(11) **EP 2 342 089 B1**
(45) Veröffentlichungstag und Bekanntmachung des Hinweises auf die Patenterteilung: **14.11.2012**
(21) Anmeldenummer: 09782428.8
(22) Anmeldetag: 01.09.2009
(51) Int. Cl.: B60C 5/14, B60C 15/06

(54) **FAHRZEUGLUFTREIFEN**
PNEUMATIC VEHICLE TIRE
PNEU DE VÉHICULE

(30) Priorität: 29.09.2008 DE 102008049315
(43) Veröffentlichungstag der Anmeldung: 13.07.2011
(73) Patentinhaber: Continental Reifen Deutschland GmbH, 30165 Hannover (DE)
(72) Erfinder: BINDER, Axel, 30161 Hannover (DE); WILKE, Thomas, 31542 Bad Nenndorf (DE); KAPPEL, Alain, F-57520 Grossblied (FR)
(74) Vertreter: Finger, Karsten
(86) Internationale Anmeldenummer: PCT/EP2009/061242
(87) Internationale Veröffentlichungsnummer: WO 2010/034593

(56) Entgegenhaltungen:
- WO-A-98/38049
- WO-A-2008/082592

## Beschreibung

Die Erfindung betrifft einen Fahrzeugluftreifen mit zwei Wulstkernen, die im radial unteren Bereich jeweils einer Reifenseitenwand ausgebildet sind, mit einer Karkasse, die aus einer oder mehreren Karkasslagen - insbesondere radialer Bauart - aus in Kautschuk eingebetteten parallelen Festigkeitsträgern ausgebildet ist und vom Wulstkern der ersten Reifenseitenwand ausgehend durch die Reifenseitenwand hindurch nach radial außen bis zum Reifenkronenbereich, durch den Reifenkronenbereich in axialer Richtung bis zur zweiten Reifenseitenwand und durch die zweite Reifenseitenwand nach radial innen bis zum Wulstkern der Reifenseitenwand hindurch erstreckt, mit einem Gürtel aus einer oder mehreren Gürtellagen, der sich im Reifenkronenbereich über den gesamten Umfang des Reifens und in axialer Richtung von Reifenschulter zu Reifenschulter hin erstreckt, mit einem Laufstreifen der radial außerhalb des Gürtels angeordnet und über den gesamten Umfang des Reifens und in axialer Richtung von Reifenschulter zur Reifenschulter hin erstreckt ausgebildet ist.

Derartige Fahrzeugluftreifen sind bekannt und sind aus verschiedenen Bauteilen wie einer speziellen, besonders luftdichten Innenschicht auf der Basis einer Halobuthylgummimischung, einem speziellen Hornprofil (rim strip) im Wulstbereich und einem im Bereich der Reifenseitenwände jeweils auf der axialen Außenseite der Karkasse aufgebauten Seitenwandabdeckstreifens aufgebaut, wobei diese Bauteile aus unterschiedlichen Kautschukmischungen bestehen. Die Herstellung eines solchen Fahrzeugluftreifens ist sehr aufwendig, erfordert relativ viele spezielle Bauteile mit hoher Mischungskomplexität. Die Herstellung erfordert die separate Herstellung der verschiedenen Kautschukmischungen für die einzelnen Bauteile, deren Weiterverarbeitung und deren spezielle Applikation auf der Reifenkarkasse. Die besonders luftdichte, sehr dünne Innenschicht auf Halobutylbasis ist sehr kostenintensiv in Material und Herstellung. Zur Begrenzung der Kosten wird üblicher Weise versucht, diese Mischung noch dünner auszubilden, wodurch die Herstellung weiter erschwert wird.

Ein derartiger Fahrzeugluftreifen ist beispielsweise aus der WO 2008/082592 A2 bekannt.

Der Erfindung liegt die Aufgabe zugrunde, einen Fahrzeugluftreifen gemäß den Merkmalen des Oberbegriffs in einfacher Weise zu schaffen, der die Anforderungen eines modernen Fahrzeugluftreifens erfüllt.

Erfindungsgemäß gelöst wird die Aufgabe durch die Ausbildung eines Fahrzeugluftreifens mit zwei Wulstkernen, die im radial unteren Bereich jeweils einer Reifenseitenwand ausgebildet sind, mit einer Karkasse, die aus einer oder mehreren Karkasslagen - insbesondere radialer Bauart - aus in Kautschuk eingebetteten parallelen Festigkeitsträgern ausgebildet ist und vom Wulstkern der ersten Reifenseitenwand ausgehend durch die Reifenseitenwand hindurch nach radial außen bis zum Reifenkronenbereich, durch den Reifenkronenbereich in axialer Richtung bis zur zweiten Reifenseitenwand und durch die zweite Reifenseitenwand nach radial innen bis zum Wulstkern der Reifenseitenwand hindurch erstreckt, mit einem Gürtel aus einer oder mehreren Gürtellagen, der sich im Reifenkronenbereich über den gesamten Umfang des Reifens und in axialer Richtung von Reifenschulter zu Reifenschulter hin erstreckt, mit einem Laufstreifen der radial außerhalb des Gürtels angeordnet und über den gesamten Umfang des Reifens und in axialer Richtung von Reifenschulter zur Reifenschulter hin erstreckt ausgebildet ist, gemäß den Merkmalen von Anspruch 1, bei dem eine einzige - insbesondere einstückig - ausgebildete Gummilage eines Gummimaterials, die sich in Umfangsrichtung des Reifens über den gesamten Umfang des Reifens erstreckt, unter Bildung der Reifenoberfläche auf der von der Karkasse aus gesehenen Innenseite des Fahrzeugluftreifens auf der Karkasse ausgehend vom Wulstkern der ersten Reifenseitenwand nach radial außen durch die Reifenseitenwand bis zum Reifenkronenbereich, in axialer Richtung durch den Reifenkronenbereich bis zur zweiten Reifenseitenwand und durch die zweite Reifenseitenwand nach radial innen bis zum Wulstkern der Reifenseitenwand hindurch erstreckt und dabei die Karkasse abdeckt, wobei diese Gummilage jeweils auf der radialen Innenseite eines jeden Wulstkerns unter Bildung der Reifenoberfläche axial nach Außen bis zur axialen Reifenaußenseite erstreckt ist und an der axialen Reifenaußenseite unter Bildung der Reifenoberfläche nach radial außen durch die Reifenseitenwand entlang der Karkasse unter Abdeckung der Karkasse zur axialen Außenseite des Fahrzeugreifens hin bis zur Reifenschulter hin erstreckt ausgebildet ist.

Auf diese Weise wird mit einem einzigen Bauteil gemeinsamer Kautschukmischung Innenschicht, Hornprofil und Seitenwandabdeckstreifen aufgebaut, wodurch die Zahl der zu erzeugenden Kautschukmischungen und die Zahl der zu erzeugenden und zu applizierenden Bauteile minimiert wird. Da die aufgebrachte Kautschukmischung selbst im dünnsten Querschnittsbereich des Reifens, nämlich im Bereich der Reifenseitenwand sich aus der Summe der Dicke der Mischungslage auf der axialen Innenseite der Karkasse und der Dicke der Mischungslage auf der axialen Außenseite der Karkasse zusammensetzt, ist die Anforderung an die Mischung zur Erzeugung der Luftdichtigkeit in dieser in Summe sehr dicken dichtenden Lage deutlich gegenüber den bei herkömmlichen Reifen an die nur dünne Innenschicht geltenden Anforderung reduziert. Die Kautschukmischung kann somit auch aus einer halobutylfreien luftdichtender Gummimischung bekannter Art hergestellt werden, die dann die benötigten Eigenschaften der herkömmlichen Einzelbauteile wie Luftdichtigkeit, Riss- und Ermüdungsbeständigkeit sowie Felgesitz in genügender Weise kombiniert. Die bisher erforderlichen Spezialbauteile für Innenschicht, Hornprofil und Seitenwandabdeckgummistreifen entfallen. Die Zahl der Bauteile des Reifens wird hierdurch reduziert und die Herstellung vereinfacht. Die Kosten können aufgrund der nun einsetzbaren einfacheren Kautschukmischung zur Erzeugung der erforderlichen Luftdichtigkeit sowie durch die einfache Herstellung reduziert werden. Auf diese Weise können auch bei modernen Fahrzeugluftreifen radialer Bauart in einfacher Weise Anforderungen an Luftdichtigkeit, Tragfähigkeit und Felgensitz gewährleistet und ein gewichts- und rollwiderstandsoptimierter Reifen hergestellt werden. Die Bauteilkomplexität kann vereinfacht und die damit verbundenen störenden Materialübergänge stark reduziert werden. Hierdurch kann ein homogeneres Verhalten im Wulstbereich erzielt werden.

Besonders vorteilhaft ist die Ausbildung eines Fahrzeugluftreifens gemäß den Merkmalen von Anspruch 2, bei dem sich die Karkasse mit ihrem Hauptteil vom einen Wulstkern in der einen Reifenseitenwand nach radial außen durch die Reifenseitenwand hindurch durch den axialen Erstreckungsbereich des Reifenkronenbereichs bis in die andere Reifenseitenwand und dort nach radial innen an einer axialen Seite des zweiten Wulstkernes entlang bis unterhalb des Wulstkernes erstreckt und mit einem Umschlagteil an der anderen axialen Seite des Wulstkernes nach radial außen erstreckt. Dies ermöglicht eine Minimierung des Rollwiderstandes.

Besonders vorteilhaft ist die Ausbildung eines Fahrzeugluftreifens gemäß den Merkmalen von Anspruch 3, bei dem sich die Karkasse mit ihrem Hauptteil in zumindest einer - insbesondere in beiden - Reifenseitenwand/Reifenseitenwänden nach radial innen an der zur axialen Innenseite des Reifens weisenden axialen Seite des zweiten Wulstkernes entlang bis unterhalb des Wulstkernes erstreckt und mit einem Umschlagteil an der vom Reifen wegweisenden axialen Außenseite Seite des Wulstkernes nach radial außen erstreckt. Dies begünstigt eine Reduktion des Rollwiderstandes bei reduzierten Kosten.

Besonders vorteilhaft ist die Ausbildung eines Fahrzeugluftreifens gemäß den Merkmalen von Anspruch 4, bei dem sich die Karkasse mit wenigstens einem - insbesondere mit beiden -Umschlagteil(en) jeweils an der vom Reifen wegweisenden axialen Außenseite Seite des Wulstkernes nach radial außen bis zum Reifenkronenbereich erstreckt und unter dem Gürtel endet. Dies ermöglicht eine einfache Herstellung und verbesserte Handlingeigenschaften. Außerdem sind an das Karkassenmaterial reduzierte Anforderungen gestellt, so dass eine größere Flexibilität in der Wahl des Karkassenmaterials besteht.

Besonders vorteilhaft ist die Ausbildung eines Fahrzeugluftreifens gemäß den Merkmalen von Anspruch 5, bei dem eine zweite Gummilage oder Gummistreifen zwischen Karkasse und Wulstkern ausgebildet ist, die sich in Umfangsrichtung des Fahrzeugluftreifens über den gesamten Umfang des Fahrzeugluftreifens erstreckt und die sich von radial innerhalb des Wulstkerns in direktem Berührkontakt zum Wulstkern mit ihren beiden axialen Erstreckungsbereichen auf beiden axialen Begrenzungsseiten des Wulstkernes jeweils in direktem Berührkontakt zum Wulstkern nach radial außen erstreckt, so dass die zweite Gummilage bzw. Gummistreifen mit Ihren beiden Erstreckungsbereichen den Wulstkern in direktem Berührkontakt vollständig umschließen, wobei sich die beiden Erstreckungsbereiche ab der Position ihres gegenseitigen Kontaktes radial außerhalb des Wulstkernes in direktem Berührkontakt zu einander nach radial außen erstrecken, und der erste Erstreckungsbereich in einer ersten radialen Position und der zweite in einer zweiten, von der ersten radialen Position abweichenden Position endet. Hierdurch wird direkt radial oberhalb des Wulstkernes Gummimaterial gebildet, das näherungsweise einen dreieckigen Querschnitt mit nach radial außen weisender Verjüngung aufweist und das im fertigen Reifen zwischen Hauptteil der Karkasse und Umschlagteil der Karkasse angeordnet ist. Hierdurch kann die Reifenseitenwand im radial inneren Bereich ausreichend biegesteif und im radial äußeren Bereich ausreichend flexibel bei weiterhin homogenem Übergang der Steifigkeit und der Flexibilität gestaltet werden, wobei durch individuelle Wahl der ersten und zweiten Position eine individuelle Gestaltung von Biegesteifigkeit und Flexibilität ermöglicht wird. Auch bei besonders schlanken Wulstkerngeometrien mit relativ kurzer axialer Erstreckung und/oder bei Wulstkerngeometrien mit nicht zylindrischer radial äußerer Mantelfläche und auch bei Wulstkernen mit größerer radialer Erstreckung als axialer Erstreckung kann das Wulstmodul sehr genau und einfach hergestellt werden. Dies begünstigt weiter das Gesamtkonzept eines einfacheren Reifens. Die Ausbildung ermöglicht eine gute Dauerhaltbarkeit des Wulstes, sicheren Sitz des Reifens auf der Felge und gute Einformbarkeit.

Besonders vorteilhaft ist die Ausbildung eines Fahrzeugluftreifens gemäß den Merkmalen von Anspruch 6, bei dem die erste radiale Position in einem radialen Abstand H_{A} von der radial äußeren Mantelfläche des Wulstkerns und die zweite radiale Position in einem radialen Abstand H_{I} von der radial äußeren Mantelfläche des Wulstkerns ausgebildet ist, wobei H_{A} > H_{I} ist und für die Differenz ΔH aus (H_{A} - H_{I}) gilt: 2mm ≤ ΔH ≤ 8mm, insbesondere ΔH=5mm. Dies ermöglicht die Ausbildung mit einem sehr schlanken, homogenen Auslauf.

Besonders vorteilhaft ist die Ausbildung eines Fahrzeugluftreifens gemäß den Merkmalen von Anspruch 7, bei dem der erste Erstreckungsbereich der zweiten Gummilage zwischen Hauptteil der Karkasse und dem zweiten Erstreckungsbereich der zweiten Gummilage ausgebildet ist. Hierdurch ist ein vereinfachter Herstellungsprozess möglich.

Besonders vorteilhaft ist die Ausbildung eines Fahrzeugluftreifens gemäß den Merkmalen von Anspruch 8, bei dem die zweite Gummilage mit einer Dicke d ausgebildet ist, für die gilt: 0,5 ≤ d ≤ 2mm. Hierdurch ist eine besonders harmonische Verbindung mit dem Wulstkern ermöglicht.

Besonders vorteilhaft ist die Ausbildung eines Fahrzeugluftreifens gemäß den Merkmalen von Anspruch 9, bei dem die zweite Gummilage von mit einer Shore A - Härte von maximal 85 - insbesondere 70 - ausgebildet ist. Hierdurch ist zur Herstellung der Gummilage auch der Einsatz von Standardkalandem möglich.

Besonders vorteilhaft ist die Ausbildung eines Fahrzeugluftreifens gemäß den Merkmalen von Anspruch 10, bei dem der Wulstkern ein aus Draht gewickelter Wulstkern ist, und dass der gewickelte Wulstkern in seiner radialen Erstreckung ein maximales Maß b und in seiner axialen Erstreckung ein maximales Maß a aufweist mit b > a, insbesondere mit b ≥ 3 a . Der in axialer Richtung schmale und in radialer Richtung hohe Wulstkern ermöglicht es, dass die über die Karkasse eingeleiteten Zugkräfte keine großen Torsionskräfte auf den Wulstkern ausüben, die Torsionsbewegungen des Wulstkernes bewirken könnten, und auch sehr stabil um den Wulstkern sitzt. Die Gefahr eines Wulstkemausfalls ist somit zusätzlich minimiert. Die Gefahr von unerwünschtem Lösen des Sitzes auf der Felge wird ebenfalls minimiert. Hierdurch können sogar sehr kurze Umschlagteile der Karkasse unter Beibehaltung eines sicheren Sitzes und mit guter Wulsthaltbarkeit umgesetzt werden.

Besonders vorteilhaft ist die Ausbildung eines Fahrzeugluftreifens gemäß den Merkmalen von Anspruch 11, bei dem der gewickelte Wulstkern ein aus Draht gewickelter Wulstkern ist und einen rechteckigen Querschnitt mit x Windungen des gewickelten Drahtes in axialer Richtung und mit y Windungen des gewickelten Drahtes in radialer Richtung aufweist, mit y > x - insbesondere mit y > 3x .

Die Erfindung wird im Folgenden an Hand der in den Figuren 1 bis 3 dargestellten Ausführungsbeispiele näher erläutert. Hierin zeigen
- Fig.1: einen erfindungsgemäßen Fahrzeugluftreifen radialer Bauart für Personenkraftwagen in schematischer Querschnittsdarstellung in einer Querschnittsebene, die die Reifenachse enthält,
- Fig. 2a: Darstellung des unteren Reifenseitenwandbereichs des Fahrzeugluftreifens von Fig. 1 mit Reifenwulst in Querschnittsdarstellung zur Erläuterung der Ausbildung des Reifenwulsts,
- Fig. 2b: Darstellung des in Fig. 2a dargestellten Reifenwulstbereichs des fertig hergestellten, auswlkanisierten Fahrzeugluftreifens, und
- Fig. 3: Vergrößerte Darstellung des mit einer Gummilage umhüllten Wulstkerns von Fig. 1 und Fig. 2a.

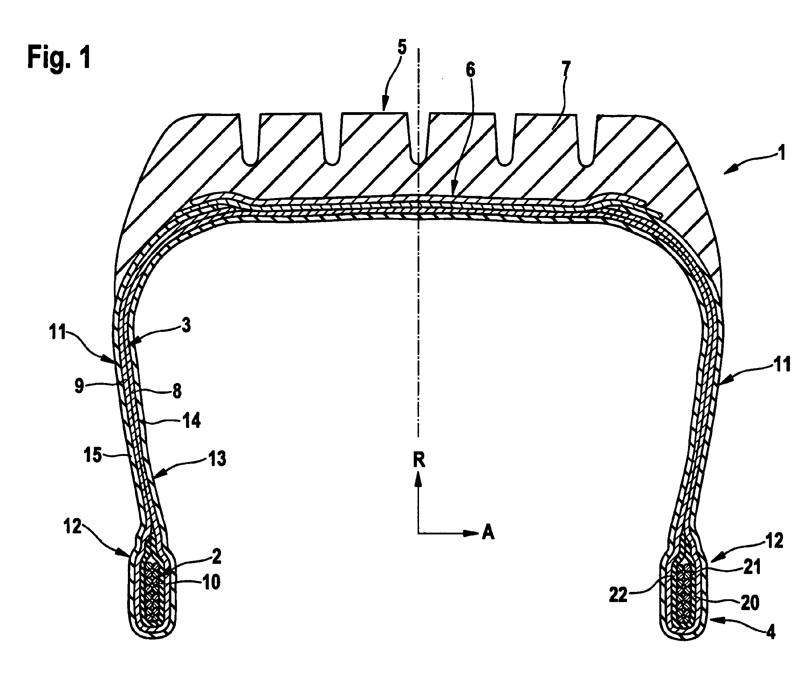

In Fig. 1 ist der Aufbau eines Fahrzeugluftreifens 1 beispielhaft dargestellt. Der Fahrzeugluftreifen ist symmetrisch zur gestrichelt dargestellten Äquatorebene ausgebildet. Der Fahrzeugluftreifen 1 ist ein Fahrzeugluftreifen radialer Bauart für Personenkraftwagen mit zwei von einander in axialer Richtung A beabstandeten Reifenseitenwänden 11 und einem axial dazwischen ausgebildeten Kronenbereich 5. Die Reifenseitenwände 11 sind in ihrem radial inneren Endbereich als Wulstbereich 12 zur Befestigung des Reifens auf der Felge ausgebildet und erstrecken sich vom Wulstbereich 12 in radialer Richtung R nach außen bis zur Reifenschulter. Der Kronenbereich 5 erstreckt sich in axialer Richtung A von Reifenschulter zu Reifenschulter.

Der Fahrzeugluftreifen 1 ist mit einer in Umfangsrichtung U über den Umfang des Fahrzeugluftreifens 1 erstreckten Karkasse 3 mit einem Hauptteil 8 und beiderseits des Hauptteils 8 jeweils ausgebildetem Umschlagteil 9 ausgebildet. Die Karkasse 3 besteht in bekannter Weise aus einer oder zwei aufeinander gelegten Lagen von in Kautschuk eingebetteten parallelen Festigkeitsträgern. Die Festigkeitsträger sind herkömmliche bekannte Festigkeitsträger zum Einsatz in Karkassen von Personenkraftwagen. Im Ausführungsbeispiel sind die Festigkeitsträger textile Festigkeitsträger, beispielsweise Corde aus Rayon, Polyester oder ähnlichem für die Herstellung von Karkassen als geeignet bekannte textile Festigkeitsträger.

Vom Wulstbereich 12 der rechts dargestellten ersten Reifenseitenwand 11 ausgehend ist die Karkasse 3 mit ihrem Hauptteil 8 in radialer Richtung nach außen durch die Reifenseitenwand 11 hindurch bis zum rechten Schulterbereich, dann vom rechten Schulterbereich in axialer Richtung A durch den Kronenbereich 5 bis zum linken Schulterbereich des Fahrzeugluftreifens 1 und vom linken Schulterbereich des Fahrzeugluftreifens 1 in radialer Richtung nach innen durch die links dargestellte zweite Reifenseitenwand 11 hindurch bis zum Wulstbereich 12 erstreckt ausgebildet.

Über den Umfang des Fahrzeugluftreifens 1 erstreckt sind radial außerhalb der Karkassenlagen der Karkasse 3 radialer Bauart angeordnet mehrere Gürtellagen eines Gürtels 6 mit in Kautschuk eingebetteten Festigkeitsträgern. Radial außerhalb des Gürtels 6 bildet auf dem Gürtel 6 angeordnet in bekannter Weise ein profilierter Laufstreifen 7 den radialen Abschluss des Reifenaufbaus.

Im Wulstbereich 12 des Fahrzeugluftreifens 1 ist ein in Umfangsrichtung U des Fahrzeugluftreifens ausgerichteter über den gesamten Umfang erstreckter zugfester Wulstkern 2 ausgebildet. Der Wulstkern 2 ist ein aus gummiertem Stahldraht gewickelter Wulstkern 2.

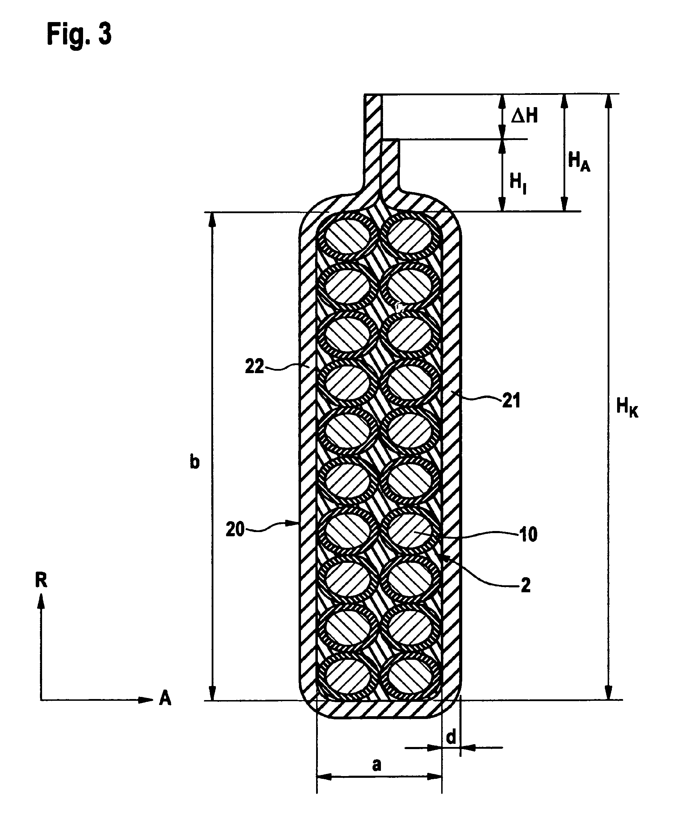

Wie in Fig. 3 zu erkennen ist, ist der Wulstkern 2 in radialer Richtung R des Fahrzeugluftreifens 1 spiralig aus einem endlosen Wulstdraht mit y in radialer Richtung übereinander in Berührkontakt zueinander befindlichen Drahtwindungen aufgewickelt. In axiale Richtung A sind jeweils x derartige Drahtwindungen nebeneinander in Berührkontakt zueinander befindlich angeordnet.

Für die Windungszahlen x in axialer Richtung A und y in radialer Richtung R gilt: y > 3x.

In dem in Fig. 3 dargestellten Ausführungsbeispiel sind in axialer Richtung A zwei Windungen (x=2) und in radialer R acht Windungen (x=8) gewählt. Der Wulstkern 2 hat einen rechteckigen Querschnitt, bei dem die kleinere Grundseite in axialer Richtung A und die größere Grundseite in radialer Richtung R des Fahrzeugluftreifens weist.

Der Wulstkern 2 weist eine maximale Erstreckung a in axialer Richtung A und eine maximale Erstreckung b in radialer Richtung R des Fahrzeugluftreifens auf

Für die Maße der maximalen Erstreckung b in radialer Richtung R und der maximalen Erstreckung a in axialer Richtung A gilt: b ≥ 3a.

In dem in Fig. 3 dargestellten Ausführungsbeispiel ist b = 4a gewählt.

Wie in Fig. 3 dargestellt ist, erstreckt sich der Wulstkern 2 mit seiner radial äußeren Mantelfläche bis in die radiale Position Rₖ. Wie in den Figuren 1, 2a und 3 dargestellt ist, ist der Fahrzeugluftreifen 1 frei von Kernreitern ausgebildet. Um den Wulstkern 2 ist ein Gummistreifen 20 gelegt, der sich über den gesamten Umfang des Fahrzeugluftreifens 1 erstreckt und der den Wulstkern 2 vollständig umhüllt. Hierzu erstreckt sich der Gummistreifen 20 über die gesamte axiale Erstreckung a des Wulstkerns 2 und über dessen gesamte Erstreckung in Umfangsrichtung an der radial inneren Mantelfläche des Wulstkerns 2 in vollständigem Berührkontakt zum Wulstkern 2. Auf der zur axialen Außenseite des Fahrzeugluftreifens weisenden axialen Seite des Wulstkerns 2 ist der Gummistreifen 20 mit seinem axial äußeren Erstreckungsbereich 21 entlang der radialen Erstreckung des Wulstkerns 2 in vollständigem Berührkontakt zur axialen Außenseite des Wulstkerns 2 nach radial außen erstreckt ausgebildet. Auf der zur axialen Innenseite des Fahrzeugluftreifens weisenden axialen Seite des Wulstkerns 2 ist der Gummistreifen 20 mit seinem axial inneren Erstreckungsbereich 22 entlang der radialen Erstreckung des Wulstkerns 2 in vollständigem Berührkontakt zur axialen Innenseite des Wulstkerns 2 nach radial außen erstreckt ausgebildet.

Der axial äußere Erstreckungsbereich 21 und der axial innere Erstreckungsbereich 22 des Gummistreifens 20 sind dabei bis zur radialen Position Rₖ der radial äußeren Mantelfläche des Wulstkerns 2 über die gesamte radiale Erstreckung des Wulstkerns 2 nach radial außen in vollständigem Berührkontakt zum Wulstkern 2 erstreckt ausgebildet. Der axial äußere Erstreckungsbereich 21 und der axial innere Erstreckungsbereich 22 des Gummistreifens 20 sind nach Erreichen der radialen Position Rₖ der radial äußeren Mantelfläche des Wulstkerns 2 entlang der radial äußeren Mantelfläche des Wulstkerns 2 in engem Berührkontakt zum Wulstkern 2 in axialer Richtung aufeinander zu erstreckt bis zu einer axialen Position, in der der axial äußere Erstreckungsbereich 21 und der axial innere Erstreckungsbereich 22 des Gummistreifens 20 im Bereich der radial äußeren Mantelfläche des Wulstkerns 2 sich berühren. Von dieser Position des Berührkontaktes ausgehend erstrecken sich der radial äußere Erstreckungsbereich 21 und der axial innere Erstreckungsbereich 22 wieder nach radial außen. Der axial äußere Erstreckungsbereich 21 des Gummistreifens 20 endet in einer radialen Position im radialen Abstand H_{I} von der radial äußeren Mantelfläche des Wulstkerns 2. Der axial innere Erstreckungsbereich 22 des Gummistreifens 20 endet in einer radialen Position im radialen Abstand H_{A} von der radial äußeren Mantelfläche des Wulstkerns 2. Dabei gilt für den radialen Abstand H_{A} und den radialen Abstand H_{I}: H_{A} > H_{I}.

Die Differenz ΔH aus (H_{A} - H_{I}) ist dabei so gewählt, dass (2mm ≤ ΔH ≤ 8mm). Im dargestellten Ausführungsbeispiel ist die Differenz gewählt mit ΔH = 5mm.

Der radiale Abstand H_{A} ist gewählt, dass (10mm ≤ H_{A} ≤ 15mm). Im gewählten Ausführungsbeispiel ist H_{A} mit H_{A} = 12mm gewählt. In alternativer, nicht dargestellter Ausführung ist H_{A} mit 25mm ≤ H_{A}, insbesondere mit 25mm ≤ H_{A} ≤ 55mm gewählt.

Der radiale Abstand H_{K}, welcher den radialen Abstand des weiter radial außen liegenden Endes der beiden axialen Erstreckungsbereiche 21 und 22 des Gummistreifens 20 von der radial inneren Mantelfläche des Wulstkern 2 angibt, ist so gewählt, dass H_{K} ≤ 25mm. In alternativer - nicht dargestellter - Ausbildung ist oder H_{K} ≥ 35mm gewählt.

Der Gummistreifen 20 ist aus einem Gummimaterial bekannter Art mit einer Härte Shore A von maximal 85 ausgebildet. Der Gummistreifen 20 ist mit einer Dicke d ausgebildet, für die gilt: 0,5 ≤ d ≤ 2mm. Im gewählten Ausführungsbeispiel sei d = 1,2 mm gewählt.

In besonderer Ausbildung ist der Gummistreifen 20 ist aus einem Gummimaterial bekannter Art mit einer Härte Shore A von 70 ausgebildet

Die Karkasse 3 erstreckt sich - wie in den Figuren 1, 2a und 3 zu erkennen ist - mit ihrem Hauptteil 8 zu beiden Seiten der Äquatorebene aus dem Kronenbereich 5 nach axial außen zur jeweiligen Reifenschulter. Von der Reifenschulter erstreckt sich die Karkasse 3 mit ihrem Hauptteil 8 jeweils durch die Reifenseitenwand 11 nach radial innen bis radial äußeren Ende des axial inneren Erstreckungsbereich 22 des Gummistreifens 20. Von hier erstreckt sich die Karkasse 3 mit ihrem Hauptteil 8 auf der axial inneren zur Äquatorebene hinweisenden Seite des axial inneren Erstreckungsbereichs 22 des Gummistreifens 20 entlang des Gummistreifen 20 in vollständigem Berührkontakt zum axial inneren Erstreckungsbereichs 22 des Gummistreifens 20 bis radial unter den Wulstkern 2 und dann radial unterhalb des Wulstkerns 2 in vollständigem Berührkontakt zum Gummistreifens 20 an der nach radial innen weisenden Seite des Gummistreifens 20 entlang nach axial außen bis zur axial äußeren vom Fahrzeugluftreifen 1 weg weisenden Seite des axial äußeren Erstreckungsbereichs 21 des Gummistreifens 20. Von hier erstreckt sich die Karkasse 3 in einem nach radial außen umgeschlagenen Umschlagteil 9 in vollständigem Berührkontakt zum axial äußeren Erstreckungsbereich 21 des Gummistreifens 20 nach radial außen an der axialen Außenseite axial äußeren Erstreckungsbereich 21 des Gummistreifens 20 entlang bis zum radial äußeren Ende des axial äußeren Erstreckungsbereichs 21. Vom radial äußeren Ende des axial äußeren Erstreckungsbereichs 21 erstreckt sich das Umschlagteil 9 der Karkasse 3 über die radiale Erstreckung ΔH in vollständigem Berührkontakt zur nach axial außen weisenden Seite des axial inneren Erstreckungsbereichs 22 des Gummistreifens 20 nach radial außen bis zum radial äußerem Ende des axial inneren Erstreckungsbereichs 22 des Gummistreifens 20. Vom radial äußeren Ende des axial inneren Erstreckungsbereichs 22 des Gummistreifens 20 aus erstreckt sich das Umschlagteil 9 der Karkasse 3 dann in vollständigem Berührkontakt zum Hauptteil 8 der Karkasse 3 weiter nach radial außen. Im dargestellten Ausführungsbeispiel erstreckt sich das Umschlagteil 9 der Karkasse 3 dabei in vollständigem Berührkontakt zum Hauptteil 8 der Karkasse 3 nach radial außen durch die gesamte radiale Erstreckung der Reifenseitenwand 11 hindurch bis in den Kronenbereich 5 des Fahrzeugluftreifens 1 und endet im Bereich der Reifenschulter unterhalb der axial äußeren Kanten des Gürtels 6.

Der Fahrzeugluftreifen 1 ist mit einer in Umfangsrichtung U über den Umfang des Fahrzeugluftreifens 1 erstreckten weiteren Gummilage 13 mit einem Hauptteil 14 und beiderseits des Hauptteils 14 jeweils ausgebildetem Umschlagteil 15 ausgebildet. Die weitere Gummilage 13 ist auf der von der Karkasse 3 aus gesehenen Innenseite des Fahrzeugluftreifens ebenfalls mit ihrem Hauptteil 14 ausgebildet, das sich in direktem Berührkontakt zum Hauptteil 8 der Karkasse 3 über den gesamten Erstreckungsbereich des Hauptteils 8 vom linken Wulstbereich 12 ausgehend in radiale Richtung R nach außen über die gesamte in Fig. 1 links dargestellte erste Reifenseitenwand 11, dann in axialer Richtung A über die gesamte axiale Erstreckung des Kronenbereichs 5 bis zu der in Fig. 1 rechts dargestellten zweiten Reifenseitenwand 11 und dann in radialer Richtung R nach innen entlang der gesamten rechts dargestellten zweiten Reifenseitenwand 11 bis zu dem rechts dargestellten Wulstbereich 12 erstreckt. In beiden Wulstbereichen 12 erstreckt sich die Gummilage 13 mit ihrem Hauptteil 14 in direktem Berührkontakt zum Hauptteil 8 der Karkasse 3 bis radial unterhalb des jeweiligen Wulstkerns 2 und dann im engen Berührkontakt zur Karkasse 3 auf der radial inneren Seite des jeweiligen Wulstkerns 2 in axialer Richtung nach außen zu der vom Fahrzeugluftreifen 1 wegweisenden Außenseite des Wulstkerns 2. Von hier erstreckt sich die Gummilage 13 jeweils mit einem Umschlagteil 15 nach radial außen durch die gesamte jeweilige Reifenseitenwand 11 in vollständigem Berührkontakt zum jeweiligen Umschlagteil 9 der Karkasse 3 an der von der Karkasse 3 nach axial außen wegweisenden Seite bis zum Laufstreifen 7 im Kronenbereich 5 des Fahrzeugluftreifens 1.

Im dargestellten Ausführungsbeispiel ist die Gummilage 13 mit ihrem Umschlagteil 15 jeweils in vollständigem Berührkontakt zum Umschlagteil 9 der Karkasse 3 nach radial außen bis in den Kronenbereich 5, in der Reifenschulter nach axial innen erstreckt in vollständigem Berührkontakt zum Umschlagteil 9 der Karkasse 3 und in zusätzlichem Berührkontakt zum Laufstreifen 7 bis zum Gürtel 6 und ab Erreichen der Gürtelkante nach axial innen erstreckt in vollständigem Berührkontakt zum Umschlagteil 9 der Karkasse 3 und in zusätzlichem Berührkontakt zum Gürtel 6. Die Erstreckung des Umschlagteils 15 endet in engem Berührkontakt unterhalb des Gürtels in Berührkontakt Umschlagteil 9 der Karkasse 3 und zum Gürtel 6.

Die Gummilage 13 ist über ihre gesamte axiale Erstreckung hinweg - d.h. ausgehend von ihrem links dargestellten ersten axialen Ende unterhalb der links dargestellten ersten Gürtelkante über ihre gesamte radiale Erstreckung über die axial äußere Seite der linke Reifenseitenwand 11 hinweg, um den links dargestellten Wulstkern 2 herum, auf der Innenseite des Fahrzeugluftreifens 1 längs der ersten links dargestellten Reifenseitenwand 11, längs des Kronenbereichs 5, längs der rechten Reifenseitenwand 11 bis unterhalb des rechten Wulstkerns 2, um den rechten Wulstkern 2 herum, längs ihrer radialen Erstreckung an der axial äußeren Seite der rechten zweiten Reifenseitenwand 11 bis zu ihrem rechts dargestellten zweiten axialen Ende unterhalb der rechts dargestellten zweiten Gürtelkante hin - aus einer einstückig ausgebildeten Kautschuklage hergestellt.

Die Gummilage 13 bildet dabei unterhalb des Laufstreifens 7 - ausgehend von der links dargestellten ersten Reifenschulter an der axialen Außenseite des Fahrzeugluftreifens 1 über ihre vollständige radiale Erstreckung an der zur Außenseite des Fahrzeugluftreifens weisenden axialen Seite der rechten Reifenseitenwand 11, über ihren gesamten Erstreckungsbereich um den linken Reifenwulst 12, über ihren gesamten Erstreckungsbereich im Innern des Fahrzeugluftreifens von links dargestelltem erstem Reifenwulst 12 zu rechts dargestelltem zweiten Reifenwulst 12, über ihren gesamten Erstreckungsbereich um den rechten Reifenwulst 12 sowie über ihre gesamte radiale Erstreckung an der zur Außenseite des Fahrzeugluftreifens weisenden Seite der rechten Reifenseitenwand 11 bis zur rechten Reifenschulter - die gesamte Oberfläche des Fahrzeugluftreifens 1.

Das Kautschukmaterial, aus dem die Gummilage 13 hergestellt ist, ist eine herkömmliche für den Reifeneinsatz geeignete halobutylfreie, die Diffusion von Luft reduzierende Kautschukmischung bekannter Art mit Widerstandsfähigkeit gegen Rissbildung und Beständigkeit gegen Ermüdung.

Die Dicke der zur Ausbildung der Gummilage 13 ausgebildeten Kautschuklage ist beispielsweise so gewählt, dass diese über ihre gesamte axiale Erstreckung vor der Wulstformung in der Vulkanisation eine gleichmäßige Dicke aufweist. Das Maß dieser Dicke ist aus dem Bereich 1mm bis 4mm gewählt. Beispielsweise liegt es bei 2mm.

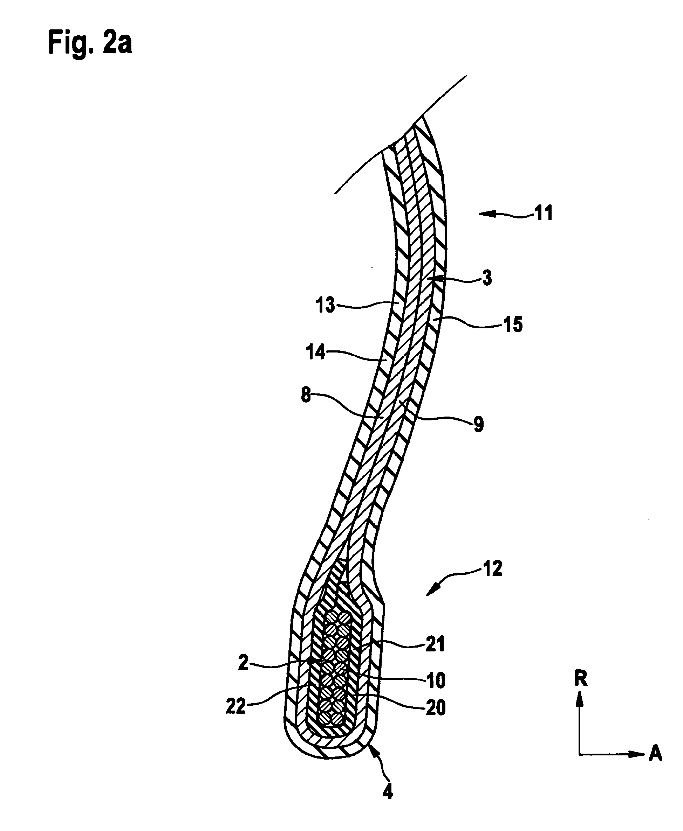

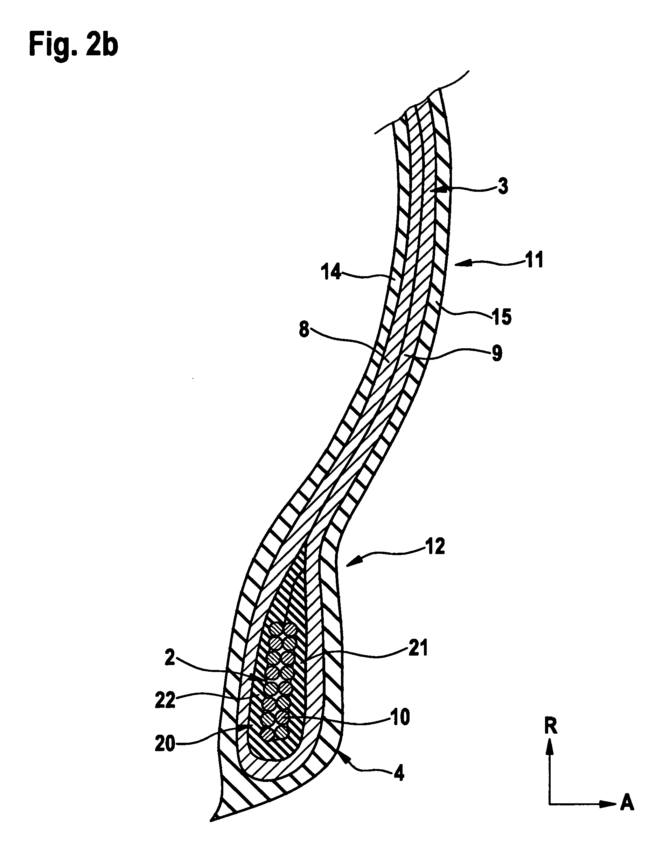

In Fig. 2b ist der in Fig. 2a dargestellte Wulstbereich nach Ausformung und Ausheizung in der Vulkanisationspresse dargestellt. Dabei ist erkennbar, dass der axial äußere Erstreckungsbereich 21 und der axial innere Erstreckungsbereich 22 des Gummistreifens 20 in ihrem radial äußeren Erstreckungsbereich radial oberhalb des Wulstkerns 2 durch ihren in Fig. 2a und 3 dargestellten Verlauf, die gewählte Dimensionierung und unterschiedliche Erstreckung beim ausgeformten Fahrzeugluftreifen 1 dazu führen, dass der axial äußere Erstreckungsbereich 21 und der axial innere Erstreckungsbereich 22 des Gummistreifens 20 zusammen direkt radial oberhalb des Wulstkerns 2 zwischen Hauptteil 8 der Karkasse 3 und Umschlagteil 9 der Karkasse 3 Gummimaterial mit einem näherungsweise dreieckigem Querschnitt mit nach radial außen weisender Verjüngung bilden. Die Reifenseitenwand 11 wird hierdurch im radial inneren Bereich biegesteif ausgebildet, wobei unter einem homogenen Übergang der Steifigkeit und der Flexibilität die Reifenseitenwand 11 im radial äußeren Bereich flexibel ist. Durch Wahl der Maße H_{A} und H_{I} und somit der Differend ΔH und die Wahl der Dicke d des Gummistreifens 20 kann die gewünschte Biegesteifigkeit im radial inneren Bereich der Reifenseitenwand 11, der gewünschte Verlauf des homogenen Übergangs der Steifigkeit und der Flexibilität bis zum flexiblen Bereich der Reifenseitenwand 11 je nach Erfordernis individuell eingestellt werden.

Fig. 2b zeigt auch, dass während der Ausformungen in der Vulkanisationspresse die Gummilage 13 im radial inneren Bereich des Reifenwulstes 12 die gewünschte Profilierung zum sicheren Sitz auf der Felge erhält.

Zur Herstellung wird bei herkömmlicher, bekannter Herstellung mit Aufbau der Karkassenlagen auf einer zylindrischen Aufbautrommel zunächst die Gummilage 13 und darüber die Karkasse 3 mit ihren Karkasslagen jeweils zylindrisch aufgebaut. Danach werden im Bereich der Sollposition der Wulstkerne 2 jeweils ein Gummistreifen 20 auf die zylindrisch aufgebaute Karkasse 3 über den Umfang der Karkasse erstreckt aufgelegt. Danach werden in herkömmlicher Weise die Wulstkerne 2 jeweils konzentrisch zur Aufbautrommel in der Sollposition auf dem jeweiligen Gummistreifen 20 positioniert. Danach werden in herkömmlicher Weise die Wulstkerne 2 in axialer Richtung aufeinander zu bewegt, der zwischen den Wulstkernen 2 befindliche Erstreckungsbereich des Hauptteils 14 der Gummilage 13, des Hauptteils 8 der Karkasse 3 und des axial inneren Erstreckungsbereichs 22 der Gummistreifen 20 wird radial expandiert und somit bombiert und die axial außerhalb der Wulstkerne 2 befindlichen Umschlagteile 15 von Gummilage 13, Umschlagteile 9 von Karkasse 3 und axial äußeren Erstreckungsbereiche 21 der Gummistreifen 20 werden nach radial außen hoch geklappt.

In alternativer Bauweise werden bei der Herstellung der Karkassenlagen direkt auf die Karkassenlagen die Kautschukstreifen zur Bildung der Gummistreifen 20 aufgebaut. In diesem Fall wird beim Aufbau auf der Karkassenaufbautrommel die Karkasse 3 gemeinsam mit dem die Gummistreifen 20 bildenden Kautschukstreifen aufgelegt. Das Ummanteln des Wulstkerns2 erfolgt wie bei der vorgenannten Herstellungsvariante.

In weiterer alternativer Herstellung wird der Wulstkern 2 bereits mit dem den Gummistreifen 20 bildenden Kautschukstreifen als Modul vorgefertigt. Der Kautschukstreifen wird hierzu bereits vorab um den vorgefertigten Wulstkern 2 umgeschlagen. Zur Herstellung des Fahrzeugluftreifens 1 wird dann dieses vorgefertigte Modul aus Wulstkern 2 und umgeschlagenen Kautschukstreifen direkt auf der Karkasse positioniert und mit eingebaut.

Die Gummilage 13 ist aus einem Gummimaterial bekannter Art mit einer Härte Shore A ausgebildet die im Bereich von 65 bis 75 liegt. In besonderer Ausführung ist sie mit einer Shore A-Härte von 70 ausgebildet.

In einer besonderen Ausführung ist die Gummilage 13 und der Gummistreifen 20 mit gleicher Shore A-Härte ausgebildet.

In einer besonderen Ausführung ist die Gummilage 13 und der Gummistreifen 20 mit gleicher Gummimischung ausgebildet.

### Bezugszeichenliste

- 1: Fahrzeugluftreifen
- 2: Wulstkern
- 3: Karkasse
- 4: Felgenhornprofil
- 5: Kronenbereich
- 6: Gürtel
- 7: Profilierter Laufstreifen
- 8: Hauptteil der Karkasse
- 9: Umschlagsteil der Karkasse
- 10: Kemdraht
- 11: Reifenseitenwand
- 12: Wulstbereich
- 13: Gummilage
- 14: Hauptteil
- 15: Umschlagteil
- 16:
- 17:
- 18:
- 19:
- 20: Gummistreifen
- 21: Axial äußerer Erstreckungsbereich
- 22: Axial innerer Erstreckungsbereich

## Patentansprüche

1. Fahrzeugluftreifen (1) mit zwei Wulstkernen (2), die im radial unteren Bereich jeweils einer Reifenseitenwand ausgebildet sind, mit einer Karkasse (3), die aus einer oder mehreren Karkasslagen aus in Kautschuk eingebetteten parallelen Festigkeitsträgern ausgebildet ist und vom Wulstkern (2) der ersten Reifenseitenwand (11) ausgehend durch die Reifenseitenwand (11) hindurch nach radial außen bis zum Reifenkronenbereich (5), durch den Reifenkronenbereich (5) in axialer Richtung bis zur zweiten Reifenseitenwand (11) und durch die zweite Reifenseitenwand (11) nach radial innen bis zum Wulstkern (2) der Reifenseitenwand (11) hindurch erstreckt, mit einem Gürtel (6) aus einer oder mehreren Gürtellagen, der sich im Reifenkronenbereich (5) über den gesamten Umfang des Reifens und in axialer Richtung von Reifenschulter zu Reifenschulter hin erstreckt, mit einem profilierten Laufstreifen (7) der radial außerhalb des Gürtels (6) angeordnet und über den gesamten Umfang des Reifens und in axialer Richtung von Reifenschulter zur Reifenschulter hin erstreckt ausgebildet ist,
**dadurch gekennzeichnet,**
**dass** eine einzige ausgebildete Gummilage (13) eines Gummimaterials, die sich in Umfangsrichtung des Reifens über den gesamten Umfang des Reifens erstreckt, unter Bildung der Reifenoberfläche auf der von der Karkasse (3) aus gesehenen Innenseite des Fahrzeugluftreifens auf der Karkasse (3) ausgehend vom Wulstkern (2) der ersten Reifenseitenwand (11) nach radial außen durch die Reifenseitenwand (11) bis zum Reifenkronenbereich (5), in axialer Richtung durch den Reifenkronenbereich (5) bis zur zweiten Reifenseitenwand (11) und durch die zweite Reifenseitenwand (11) nach radial innen bis zum Wulstkern (2) der Reifenseitenwand (11) hindurch erstreckt und dabei die Karkasse (3) abdeckt, wobei diese Gummilage (13) jeweils auf der radialen Innenseite eines jeden Wulstkerns (2) unter Bildung der Reifenoberfläche axial nach Außen bis zur axialen Reifenaußenseite erstreckt ist und an der axialen Reifenaußenseite unter Bildung der Reifenoberfläche nach radial außen durch die Reifenseitenwand (11) entlang der Karkasse (3) unter Abdeckung der Karkasse (3) zur axialen Außenseite des Fahrzeugreifens hin bis zur Reifenschulter hin erstreckt ausgebildet ist.

2. Fahrzeugluftreifen gemäß den Merkmalen von Anspruch 1,
wobei sich die Karkasse (3) mit ihrem Hauptteil (8) vom einen Wulstkern (2) in der einen Reifenseitenwand (11) nach radial außen durch die Reifenseitenwand (11) hindurch durch den axialen Erstreckungsbereich des Reifenkronenbereichs (5) bis in die andere Reifenseitenwand (11) und dort nach radial innen an einer axialen Seite des zweiten Wulstkernes (2) entlang bis unterhalb des Wulstkernes (2) erstreckt und mit einem Umschlagteil (9) an der anderen axialen Seite des Wulstkernes (2) nach radial außen erstreckt.

3. Fahrzeugluftreifen gemäß den Merkmalen von Anspruch 2,
wobei sich die Karkasse (3) mit ihrem Hauptteil (8) in zumindest einer - insbesondere in beiden - Reifenseitenwand/Reifenseitenwänden (11) nach radial innen an der zur axialen Innenseite des Reifens weisenden axialen Seite des zweiten Wulstkernes (2) entlang bis unterhalb des Wulstkernes (2) erstreckt und mit einem Umschlagteil (9) an der vom Reifen wegweisenden axialen Außenseite Seite des Wulstkernes (2) nach radial außen erstreckt.

4. Fahrzeugluftreifen gemäß den Merkmalen von Anspruch 3,
wobei sich die Karkasse (3) mit wenigstens einem - insbesondere mit beiden - Umschlagteil(en) (9) jeweils an der vom Reifen wegweisenden axialen Außenseite Seite des Wulstkernes (2) nach radial außen bis zum Reifenkronenbereich (5) erstreckt und unter dem Gürtel (6) endet.

5. Fahrzeugluftreifen gemäß den Merkmalen von einem oder mehreren der Ansprüche 2 bis 4,
bei der eine zweite Gummilage oder Gummistreifen (21) zwischen Karkasse (3) und Wulstkern (2) ausgebildet ist, die sich in Umfangsrichtung des Fahrzeugluftreifens über den gesamten Umfang des Fahrzeugluftreifens erstreckt und die sich von radial innerhalb des Wulstkerns (2) in direktem Berührkontakt zum Wulstkern (2) mit ihren beiden axialen Erstreckungsbereichen (21,22) auf beiden axialen Begrenzungsseiten des Wulstkernes (2) jeweils in direktem Berührkontakt zum Wulstkern (2) nach radial außen erstreckt, so dass die zweite Gummilage bzw. der zweite Gummistreifen (20) mit Ihren beiden Erstreckungsbereichen (21,22) den Wulstkern (2) in direktem Berührkontakt vollständig umschließen, wobei sich die beiden Erstreckungsbereiche (21,22) ab der Position ihres gegenseitigen Kontaktes radial außerhalb des Wulstkernes (2) in direktem Berührkontakt zu einander nach radial außen erstrecken, und der erste Erstreckungsbereich (22) in einer ersten radialen Position und der zweite (21) in einer zweiten, von der ersten radialen Position abweichenden Position endet.

6. Fahrzeugluftreifen gemäß den Merkmalen von Anspruch 5,
wobei die erste radiale Position in einem radialen Abstand H_{A} von der radial äußeren Mantelfläche des Wulstkerns (2) und die zweite radiale Position in einem radialen Abstand H_{I} von der radial äußeren Mantelfläche des Wulstkerns (2) ausgebildet ist, wobei H_{A} > H_{I} ist und für die Differenz ΔH aus (H_{A} - H_{I}) gilt: 2mm ≤ ΔH ≤ 8mm, insbesondere ΔH=5mm.

7. Fahrzeugluftreifen gemäß den Merkmalen von Anspruch 5 oder 6,
bei dem die erste radiale Position radial weiter außerhalb als die zweite radiale Position ausgebildet ist,
bei dem der erste Erstreckungsbereich (22) der zweiten Gummilage zwischen Hauptteil der Karkasse (3) und dem zweiten Erstreckungsbereich (21) der zweiten Gummilage ausgebildet ist.

8. Fahrzeugluftreifen gemäß den Merkmalen von Anspruch 5,6 oder 7,
wobei die zweite Gummilage (20) mit einer Dicke d ausgebildet ist, für die gilt: 0,5 ≤ d ≤ 2mm.

9. Fahrzeugluftreifen gemäß den Merkmalen von Anspruch 5, 6,7 oder 8,
wobei die zweite Gummilage (20) mit einer Shore A - Härte von maximal 85 - insbesondere 70 - ausgebildet ist

10. Fahrzeugluftreifen gemäß den Merkmalen von einem oder mehreren der vorangegangenen Ansprüche,
dass der Wulstkern (2) ein aus Draht (10) gewickelter Wulstkern (2) ist, und dass der gewickelte Wulstkern (2) in seiner radialen Erstreckung ein maximales Maß b und in seiner axialen Erstreckung ein maximales Maß a aufweist mit b > a, insbesondere mit b ≥ 3 a.

11. Fahrzeugluftreifen gemäß den Merkmalen von einem oder mehreren der vorangegangenen Ansprüche,
wobei der gewickelte Wulstkern (2) ein aus Draht (10) gewickelter Wulstkern (2) ist und einen rechteckigen Querschnitt mit x Windungen des gewickelten Drahtes (10) in axialer Richtung und mit y Windungen des gewickelten Drahtes (10) in radialer Richtung aufweist, mit y > x - insbesondere mit y > 3x.

## Claims

1. Pneumatic vehicle tyre (1) with two bead cores (2) which are formed in each case in the radially lower region of a tyre side wall, with a carcass (3) which is formed from one or more carcass plies composed of parallel strengtheners embedded in rubber and which, starting from the bead core (2) of the first tyre side wall (11), extends through the tyre side wall (11) radially outwards as far as the tyre crown region (5), through the tyre crown region (5) in the axial direction as far as the second tyre side wall (11) and through the second tyre side wall (11) radially inwards as far as the bead core (2) of the tyre side wall (11), with a belt (6) composed of one or more belt plies, which extends in the tyre crown region (5) over the entire circumference of the tyre and in the axial direction from tyre shoulder to tyre shoulder, and with a profiled running strip (7) which is arranged radially outside the belt (6) and is designed to extend over the entire circumference of the tyre and in the axial direction from tyre shoulder to tyre shoulder,
**characterized in that**
a single rubber ply (13) of a rubber material, which rubber ply extends in the circumferential direction of the tyre over the entire circumference of the tyre, extends, so as to form the tyre surface, on the inside of the pneumatic vehicle tyre, as seen from the carcass (3), on the carcass (3), starting from the bead core (2) of the first tyre side wall (11) radially outwards through the tyre side wall (11) as far as the tyre crown region (5), in the axial direction through the tyre crown region (5) as far as the second tyre side wall (11) and through the second tyre side wall (11) radially inwards as far as the bead core (2) of the tyre side wall (11) and at the same time covers the carcass (3), this rubber ply (13) extending in each case on the radial inside of each bead core (2), so as to form the tyre surface, axially outwards as far as the axial tyre outside, and being designed to extend on the axial tyre outside, so as to form the tyre surface, radially outwards through the tyre side wall (11) along the carcass (3), at the same time covering the carcass (3), to the axial outside of the vehicle tyre as far as the tyre shoulder.

2. Pneumatic vehicle tyre according to the features of Claim 1, the carcass (3) extending with its main part (8) from one bead core (2) in one tyre side wall (11) radially outwards through the tyre side wall (11), through the region of axial extent of the tyre crown region (5) into the other tyre side wall (11) and there radially inwards along an axial side of the second bead core (2) to below the bead core (2) and extending with a wrap-around part (9) radially outwards on the other axial side of the bead core (2).

3. Pneumatic vehicle tyre according to the features of Claim 2, the carcass (3) extending with its main part (8) in at least one tyre side wall (11), in particular in both tyre side walls (11), radially inwards, along that axial side of the second bead core (2) which points towards the axial inside of the tyre, to below the bead core (2) and extending with a wrap-around part (9) radially outwards on that axial outside of the bead core (2) which points away from the tyre.

4. Pneumatic vehicle tyre according to the features of Claim 3, the carcass (3) extending with at least one wrap-around part (9), in particular with both wrap-around parts (9), radially outwards, in each case on that axial outside of the bead core (2) which points away from the tyre, as far as the tyre crown region (5) and terminating under the belt (6).

5. Pneumatic vehicle tyre according to the features of one or more of Claims 2 to 4, in which a second rubber ply or rubber strip (21) is formed between the carcass (3) and bead core (2), extends in the circumferential direction of the pneumatic vehicle tyre over the entire circumference of the pneumatic vehicle tyre and extends radially outwards radially from inside the bead core (2), in direct touch contact with the bead core (2), with its two regions of axial extent (21, 22) on both axial boundary sides of the bead coil (2), in each case in direct touch contact with the bead core (2), so that the second rubber ply or second rubber strip (20) completely surrounds with its two regions of extent (21, 22) the bead core (2) in direct touch contact, the two regions of extent (21, 22) extending, from the position of their mutual contact, radially outside the bead core (2) radially outwards in direct touch contact with one another, and the first region of extent (22) terminating in a first radial position and the second region of extent (21) terminating in a second position deviating from the first radial position.

6. Pneumatic vehicle tyre according to the features of Claim 5, the first radial position being formed at a radial distance H_{A} from the radially outer surface area of the bead core (2) and the second radial position being formed at a radial distance H_{I} from the radially outer surface area of the bead core (2), H_{A} being □ H_{I} and the following applying to the difference ΔH of (H_{A} - H_{I}): 2 mm ≤ ΔH ≤ 8 mm, in particular ΔH=5mm.

7. Pneumatic vehicle tyre according to the features of Claim 5 or 6, in which the first radial position is formed radially further outside than the second radial position, and in which the first region of extent (22) of the second rubber ply is formed between the main part of the carcass (3) and the second region of extent (21) of the second rubber ply.

8. Pneumatic vehicle tyre according to the features of Claim 5, 6 or 7, the second rubber ply (20) being formed with a thickness d to which the following applies: 0.5 ≤ d ≤ 2 mm.

9. Pneumatic vehicle tyre according to the features of Claim 5, 6, 7 or 8, the second rubber ply (20) being formed with a Shore A hardness of at most 85, in particular 70.

10. Pneumatic vehicle tyre according to the features of one or more of the preceding claims, the bead core (2) being a bead core (2) wound from wire (10), and the wound bead core (2) having a maximum dimension b in its radial extent and a maximum dimension a in its axial extent, with b □ a, in particular with b ≥ 3a.

11. Pneumatic vehicle tyre according to the features of one or more of the preceding claims, the wound bead core (2) being a bead core (2) wound from wire (10) and having a rectangular cross section with x turns of the wound wire (10) in the axial direction and with y turns of the wound wire (10) in the radial direction, with y □ x, in particular with y □ 3x.

## Revendications

1. Bandage pneumatique (1) pour roue de véhicule, présentant
deux âmes (2) de bourrelet réalisées dans la partie radialement inférieure de chaque partie latérale du bandage de roue,
une carcasse (3) constituée d'une ou plusieurs couches de carcasse de renforts parallèles incorporés dans du caoutchouc et qui s'étend depuis l'âme (2) de bourrelet de la première paroi latérale (11) du bandage de roue, radialement vers l'extérieur sur la paroi latérale (11) du bandage de roue jusqu'au niveau de la couronne (5) du bandage de roue,
axialement sur la couronne (5) du bandage de roue jusqu'à la deuxième paroi latérale (11) du bandage de roue et radialement vers l'intérieur sur la deuxième paroi (11) du bandage de roue jusqu'à l'âme (2) du bourrelet de la paroi latérale (11) du bandage de roue,
une ceinture (6) constituée d'une ou plusieurs couches de ceinture qui s'étendent sur toute la périphérie du bandage de roue au niveau de la couronne (5) du bandage de roue et axialement depuis un épaulement du bandage de roue jusqu'à l'autre épaulement du bandage de roue et
une bande de roulement profilée (7) disposée radialement à l'extérieur de la ceinture (6) et s'étendant sur toute la périphérie du bandage de roue et axialement d'un épaulement du bandage de roue jusqu'à l'autre épaulement du bandage de roue, **caractérisé en ce que**
une seule couche de caoutchouc (13) formée d'un matériau de caoutchouc et qui s'étend dans la direction périphérique du bandage de roue sur toute la périphérie du bandage de roue pour former la surface du bandage de roue sur la carcasse (3) du côté du bandage pneumatique pour roue de véhicule qui s'étend à l'intérieur de la carcasse (3) en partant de l'âme (2) du bourrelet de la première paroi latérale (11) du bandage de roue, radialement vers l'extérieur sur la paroi (11) du bandage de roue jusqu'au niveau de la couronne (5) du bandage de roue, axialement au niveau de la couronne (5) du bandage de roue jusqu'à la deuxième paroi latérale (11) du bandage de roue et radialement vers l'intérieur sur la deuxième paroi latérale (11) du bandage de roue jusqu'à l'âme (2) du bourrelet de la paroi latérale (11) du bandage de roue pour ainsi recouvrir la carcasse (3),
cette couche (13) de caoutchouc s'étendant sur le côté radialement intérieur de chaque âme (2) de bourrelet en formant la surface du bandage de roue axialement vers l'extérieur jusqu'au côté extérieur axial du bandage de roue et sur le côté extérieur axial du bandage de roue pour former la surface du bandage de roue et radialement vers l'extérieur sur la paroi latérale (11) du bandage de roue le long de la carcasse (3) en recouvrant la carcasse (3) jusqu'au côté extérieur axial du bandage de roue de véhicule et jusqu'à l'épaulement du bandage de roue.

2. Bandage pneumatique pour roue de véhicule selon les caractéristiques de la revendication 1, dans lequel la carcasse (3) s'étend par sa partie principale (8) depuis une âme (2) de bourrelet dans une des parois latérales (11) du bandage de roue, radialement vers l'extérieur sur la paroi latérale (11) du bandage de roue, sur l'extension axiale de la couronne (5) du bandage de roue jusqu'à l'autre paroi latérale (11) du bandage de roue, de là radialement vers l'intérieur sur un côté axial de la deuxième âme (2) de bourrelet jusqu'en dessous de l'âme (2) du bourrelet et par une partie rabattue (9) radialement vers l'extérieur sur l'autre côté axial de l'âme (2) de bourrelet.

3. Bandage pneumatique pour roue de véhicule selon les caractéristiques de la revendication 2, dans lequel la carcasse (3) s'étend par sa partie principale (8) dans au moins une et en particulier dans les deux parois latérales (11) du bandage de roue, radialement vers l'intérieur sur le côté axial de la deuxième âme (2) de bourrelet tourné vers le côté axial intérieur du bandage de roue jusqu'en dessous de l'âme (2) de bourrelet et radialement vers l'extérieur par une partie rabattue (9) sur le côté axial extérieur, non tourné vers le bandage de roue, de l'âme (2) de bourrelet.

4. Bandage pneumatique pour roue de véhicule selon les caractéristiques de la revendication 3, dans lequel la carcasse (3) s'étend par au moins une partie rabattue (9) et en particulier par les deux parties rabattues (9) sur chacun des côtés extérieurs axiaux, non tournés vers le bandage de roue, de l'âme (2) de bourrelet et radialement vers l'intérieur jusqu'au niveau de la couronne (5) du bandage de roue pour se terminer en dessous de la ceinture (6).

5. Bandage pneumatique pour roue de véhicule selon les caractéristiques d'une ou plusieurs des revendications 2 à 4, dans lequel une deuxième couche de caoutchouc ou ruban de caoutchouc (21) est formée entre la carcasse (3) et l'âme (2) de bourrelet, s'étend dans la direction périphérique du bandage pneumatique pour roue de véhicule sur toute la périphérie du bandage pneumatique pour roue de véhicule et radialement vers l'extérieur, radialement à l'intérieur de l'âme (2) de bourrelet et en contact direct avec l'âme (2) de bourrelet par ses deux parties d'extension axiale (21, 22) sur les deux côtés frontières axiaux de l'âme (2) de bourrelet, chaque fois en contact direct avec l'âme (2) de bourrelet, de telle sorte que la deuxième couche de caoutchouc ou le deuxième ruban (20) de caoutchouc entourent complètement en contact direct l'âme (2) de bourrelet par leurs deux parties d'extension (21, 22), les deux parties d'extension (21, 22) s'étendant en contact direct l'une avec l'autre et radialement vers l'extérieur depuis la position de leur contact mutuel, radialement à l'extérieur de l'âme (2) de bourrelet, la première partie d'extension (22) se terminant dans une première position radiale et la deuxième partie d'extension (21) dans une deuxième position qui est différente de la première position radiale.

6. Bandage pneumatique pour roue de véhicule selon les caractéristiques de la revendication 5, dans lequel la première position radiale est située à une première distance radiale H_{A} de la surface d'enveloppe extérieure de l'âme (2) de bourrelet et la deuxième position radiale à une distance radiale H_{I} de la surface d'enveloppe radialement extérieure de l'âme (2) de bourrelet, avec H_{A} > H_{I} et pour la différence ΔH (H_{A} et H_{I}) : 2 mm ≤ ΔH ≤ 8 mm et en particulier ΔH = 5 mm.

7. Bandage pneumatique pour roue de véhicule selon les caractéristiques des revendications 5 ou 6, dans lequel la première position radiale est située radialement plus à l'extérieur que la deuxième position radiale et dans lequel la première plage d'extension (22) de la deuxième couche de caoutchouc est située entre la partie principale de la carcasse (3) et la deuxième partie d'extension (21) de la deuxième couche de caoutchouc.

8. Bandage pneumatique pour roue de véhicule selon les caractéristiques 5, 6 ou 7, dans lequel la deuxième couche de caoutchouc (20) présente une épaisseur d qui vérifie la relation : 0,5 ≤ d ≤ 2 mm.

9. Bandage pneumatique pour roue de véhicule selon les caractéristiques 5, 6, 7 ou 8, dans lequel la deuxième couche de caoutchouc (20) présente une dureté Shore A d'au plus 85 et en particulier de 70.

10. Bandage pneumatique pour roue de véhicule selon les caractéristiques d'une ou plusieurs des revendications précédentes, dans lequel l'âme (2) de bourrelet est une âme (2) de bourrelet constituée de fil (10) enroulé et dans lequel l'âme (2) enroulée de bourrelet présente dans son extension radiale une dimension maximale b et dans son extension axiale une dimension maximale a, avec b > a et en particulier b ≥ 3 a.

11. Bandage pneumatique pour roue de véhicule selon les caractéristiques d'une ou plusieurs des revendications précédentes, dans lequel l'âme (2) enroulée de bourrelet est une âme (2) enroulée de bourrelet constituée de fil (10) et présente une section transversale rectangulaire dotée de x enroulements de fil (10) enroulé dans la direction axiale et y enroulements de fil (10) enroulé dans la direction radiale, avec y > x et en particulier y > 3x.
